# EUROPEAN PATENT APPLICATION

(11) **EP 4 530 088 A1**
(43) Date of publication of application: **02.04.2025**
(21) Application number: 24806048.5
(22) Date of filing: 05.01.2024
(51) Int. Cl.: B42D 25/30, B42D 25/20, B42D 25/40, B42D 25/00, B42D 25/373, B42D 25/324, B42D 25/328

(54) **OPTICAL ANTI-COUNTERFEITING ELEMENT, OPTICAL ANTI-COUNTERFEITING PRODUCT, AND MANUFACTURING METHOD**

(30) Priority: 16.05.2023 CN 202310551025
(71) Applicant: Zhongchao Special Security Technology Co., Ltd, Beijing 100070 (CN); China Banknote Printing and Minting Corp., Beijing 100044 (CN)
(72) Inventor: ZHANG, Weiwei, Beijing 100070 (CN); SUN, Kai, Beijing 100070 (CN); ZHANG, Baoli, Beijing 100070 (CN); YANG, Dong, Beijing 100070 (CN)
(74) Representative: Zacco GmbH
(86) International application number: PCT/CN2024/070942
(87) International publication number: WO 2024/234684

(57) **Abstract**

The present invention provides an optical anti-counterfeiting element, an optical anti-counterfeiting product and a manufacturing method. The optical anti-counterfeiting element includes: a substrate; a micro-structure forming layer, wherein the micro-structure forming layer is arranged on a side surface of the substrate, the micro-structure forming layer has micro-structures, and a longitudinal section of each of the micro-structures has a preset shape; and a coating layer, wherein the coating layer is arranged on the micro-structure forming layer, the micro-structures are coated with the coating layer to form a coated micro-structure, and a height of each of the coated micro-structures continuously changes; wherein when shapes of the micro-structures have an abrupt-change, the coating layer has a demetallized region, and when a height of each of the micro-structures changes continuously, the coating layer has no demetallized region. The present invention solves the problem in the related art that an optical effect actually generated by the optical anti-counterfeiting element has large deviation from an expected optical effect.

## Description

The present invention claims priority to Patent Application No. 202310551025.X, filed to the China National Intellectual Property Administration on May 16, 2023 and entitled "Optical Anti-Counterfeiting Element, Optical Anti-Counterfeiting Product and Manufacturing Method".

### Technical Field

The present invention relates to the technical field of optical anti-counterfeiting devices, and in particular, to an optical anti-counterfeiting element, an optical anti-counterfeiting product and a manufacturing method.

### Background

An optical anti-counterfeiting product generally modulates incident light by using an optical micro-structure and a coating layer, to form a plurality of optical features, such as colors, dynamics, and stereo features, etc. These features are different from those of a generally fixed and planarized printing pattern. When an optical anti-counterfeiting element is tilted and rotated, a corresponding pattern may generate a color change, a dynamic feeling or a special feeling that the pattern is floating above/recessed into the plane where the pattern is located, thereby protecting the product.

The optical micro-structure is typically a micro-nanostructure, and the structure may be a refractive element such as a micro-lens; may be a reflective element, such as a reflective surface; may also be a diffractive element, such as a holographic grating; or a surface plasmon structure of a smaller size capable of achieving interaction between light and electrons, such as a sub-wavelength grating. No matter which optical principle is based on, the features of the micro-structure are generally in the plane of the optical anti-counterfeiting element, and undulating surface morphologies of various shapes are obtained by means of micro-nano machining.

For the other key element, i.e. the coating layer, generally, a layer of optical thin film is formed on the surface of the structure by means of vacuum physical vapor deposition or chemical vapor deposition. Generally, specific optical features may be obtained by using a single layer of metal material/dielectric material, or a stack of metal material and a stack of dielectric material, or a manner of metal materials/dielectric materials overlapping with each other.

Under existing process conditions, the micro-structure is generally obtained by means of laser interference, laser direct writing or electron beam direct writing, and then mass production is performed by means of mold pressing, ultraviolet casting, etc., and the micro-structure is transferred to other substrates. However, there are two situations in which the optical features of an actual product deviate from original designs. When parameters of the micro-structure are changed, the height of each of the micro-structures abruptly changes, and the structure is deformed. For example, as for two reflective surfaces in close proximity to each other and having the same orientation, the position of the highest point of a first reflective surface in the plane of the optical element is theoretically the same as the position of the lowest point of a second reflective surface in the plane of the optical anti-counterfeiting element. However, in an actual manufacturing process, neither precision of a preparation manner (laser, electron beam) nor resolution of a material (photoresist) is able to form such a steep abrupt change, but a gradual change from the highest point to the lowest point is formed within a certain size range, for example, within a range of 0.5-1 µm. Such a gradient change forms another micro-structure which was not considered at the beginning of the design, which thus will generate interference to the design effect, thereby causing deviation of the optical features. In addition, the micro-structure replicates the resulting contraction and deformation. The original micro-structure may not be replicated 100% in the replication process, and deviations will be generated to some extent, especially at positions where the height of each of the micro-structures abruptly changes.

Due to isomorphic coverage, the coating layer on these micro-structure change regions will also keep the described defect, and even amplifies deviations caused by the defect. Therefore, there is a need to weaken or avoid the occurrence of these problems in practical production, making actual optical features as consistent as possible with intended designs.

### Summary

Some embodiments of the present invention provide an optical anti-counterfeiting element, an optical anti-counterfeiting product and a manufacturing method, so as to solve the problem in the related art that an optical effect actually generated by the optical anti-counterfeiting element has large deviation from an expected optical effect.

In an embodiment of the present invention, an optical anti-counterfeiting element is provided, including: a substrate; a micro-structure forming layer, wherein the micro-structure forming layer is arranged on a side surface of the substrate, the micro-structure forming layer has micro-structures, and a longitudinal section of each of the micro-structures has a preset shape; and a coating layer, wherein the coating layer is arranged on the micro-structure forming layer, the micro-structures are coated with the coating layer to form coated micro-structures, and the height of each of the coated micro-structures continuously changes; when shapes of the micro-structures have an abrupt-change, the coating layer has a demetallized region, and when the height of each of the micro-structures changes continuously, the coating layer has no demetallized region.

In some embodiments, the demetallized region is provided at a position where the abrupt change occurs in the micro-structures, such that the height of each of the coated micro-structures changes continuously, wherein the demetallized region is in a non-macro demetallized graphic-text form; the non-macro demetallized graphic-text refers to demetallized graphic-text which is not able to be observed directly by human eyes and is able to be observed only by using a microscope, and the non-macro demetallized graphic-text does not affect the anti-counterfeiting effect of the coating layer.

In some embodiments, the demetallized region has a feature width greater than or equal to 0.1 µm and less than or equal to 100 µm.

In some embodiments, a ratio of the area of the demetallized region to the total area of the optical anti-counterfeiting element is less than or equal to 0.5.

In some embodiments, when there are a plurality of demetallized regions, at least two demetallized regions among the plurality of demetallized regions are connected with each other.

In some embodiments, when there are a plurality of demetallized regions, at least two demetallized regions among the plurality of demetallized regions are not connected with each other.

In some embodiments, the preset shape includes at least one of a sine shape, a wedge shape, symmetrical rectangular teeth, asymmetrical rectangular teeth, a semicircular rectangular shape, and a trapezoid shape.

In some embodiments, each of the micro-structures has a feature size of greater than or equal to 0.1 µm and less than or equal to 500 µm in a plane parallel to the substrate.

In some embodiments, each of the micro-structures has a feature size of greater than or equal to 0.2 µm and less than or equal to 100 µm in a plane parallel to the substrate.

In some embodiments, the coating layer provides a preset reflective feature or a preset transmissive feature.

In some embodiments, the coating layer is a single reflective layer or a single dielectric layer.

In some embodiments, the coating layer is a stack layer formed by stacking multiple layers of dielectric layers; or the coating layer is a stack layer formed by alternately stacking reflective layers and dielectric layers.

In some embodiments, the optical anti-counterfeiting element further includes a protective layer, wherein the protective layer is arranged on the coating layer, and the protective layer is a transparent layer.

In some embodiments, the difference in refractive indexes between the protective layer and the micro-structure forming layer is less than 0.5.

In another embodiment of the present invention, an optical anti-counterfeiting product is provided, including the described optical anti-counterfeiting element.

In another embodiment of the present invention, a method for manufacturing an optical anti-counterfeiting element is provided, wherein the method for manufacturing an optical anti-counterfeiting element is configured for manufacturing the optical anti-counterfeiting element as described above, wherein the method for manufacturing an optical anti-counterfeiting element includes: a micro-structure forming layer having micro-structures is formed on a substrate; a coating layer having a demetallized region is formed on the micro-structure forming layer; and a protective layer is formed on the coating layer.

By applying the technical solutions of some embodiments of the present invention, the optical anti-counterfeiting element includes a substrate, a micro-structure forming layer and a coating layer, wherein the micro-structure forming layer is arranged on a side surface of the substrate, the micro-structure forming layer has micro-structures, and a longitudinal section of each of the micro-structures has a preset shape; and the coating layer is arranged on the micro-structure forming layer, the micro-structures are coated with the coating layer to form coated micro-structures, and the height of each of the coated micro-structures continuously changes; wherein when shapes of the micro-structures have an abrupt-change, the coating layer has a demetallized region, and when the height of each of the micro-structures changes continuously, the coating layer has no demetallized region.

By providing the coating layer on the micro-structure forming layer, the height of the formed coated micro-structure continuously changes, thereby avoiding defect generated by the coating layer caused by abrupt change, avoiding abrupt change in optical features, and ensuring the anti-counterfeiting performance of the optical anti-counterfeiting element. In some embodiments of the present invention, shapes of the micro-structures has an abrupt-change, and at this time, the coating layer has a demetallized region, and the arrangement of the demetallized region facilitates continuous change of the height of each of the coated micro-structures, thereby preventing optical features of the optical anti-counterfeiting element from being affected by the abrupt change. In other embodiments of the present invention, the height of each of the micro-structures continuously changes without an abrupt-change position, and at this time, the coating layer has no demetallized region, thereby avoiding the risk of the optical property of the coating layer changing due to abrupt change of the micro-structure, and further avoiding the change of anti-counterfeiting features of the optical anti-counterfeiting element.

### Brief Description of the Drawings

The drawings of the description, constituting a part of the present invention, are configured for providing further understanding of the present invention. The illustrative embodiments of the present invention and illustrations thereof are configured for explaining the present invention, rather than constitute inappropriate limitation on the present invention. In the drawings:
Fig. 1 shows a view of an optical anti-counterfeiting product from one angle in the related art;
Fig. 2 shows a schematic structural diagram of a micro-structure forming layer of the optical anti-counterfeiting element in Fig. 1;
Fig. 3 shows a schematic diagram of the positional relationship between the micro-structure forming layer and a coating layer of the optical anti-counterfeiting element in Fig. 1;
Fig. 4 shows an effect diagram of optical features of the optical anti-counterfeiting product of Fig. 1 at a first observation angle;
Fig. 5 shows an effect diagram of optical features of the optical anti-counterfeiting product of Fig. 1 at a second observation angle;
Fig. 6 shows an effect diagram of optical features of the optical anti-counterfeiting product of Fig. 1 at a third observation angle;
Fig. 7 shows a view of the position where a light spot is generated of the optical anti-counterfeiting element in Fig. 1 at the first observation angle;
Fig. 8 shows a view of the position where a light spot is generated of the optical anti-counterfeiting element in Fig. 1 at the second observation angle;
Fig. 9 shows a view of the position where a light spot is generated of the optical anti-counterfeiting element in Fig. 1 at the third observation angle;
Fig. 10 shows a view of an optical anti-counterfeiting element from one angle in Embodiment I of the present invention;
Fig. 11 shows a structural comparison diagram of the optical anti-counterfeiting element in Embodiment I of the present invention before and after hollowing-out;
Fig. 12 shows a view of the position where a light spot is generated of the optical anti-counterfeiting element in Fig. 10 at a first observation angle;
Fig. 13 shows a view of the position where a light spot is generated of the optical anti-counterfeiting element in Fig. 10 at a second observation angle;
Fig. 14 shows a view of the position where a light spot is not generated of the optical anti-counterfeiting element in Fig. 10 at a third observation angle;
Fig. 15 shows an effect diagram of optical features of the optical anti-counterfeiting product of Fig. 10 at the first observation angle;
Fig. 16 shows an effect diagram of optical features of the optical anti-counterfeiting product of Fig. 10 at the second observation angle;
Fig. 17 shows an effect diagram of optical features of the optical anti-counterfeiting product of Fig. 10 at the third observation angle;
Fig. 18 shows a view of an optical anti-counterfeiting element from one angle in Embodiment II of the present invention;
Fig. 19 shows a cross-sectional view of Fig. 18 from one angle;
Fig. 20 shows a view of an optical anti-counterfeiting element from one angle in Embodiment III of the present invention;
Fig. 21 shows a cross-sectional view of the optical anti-counterfeiting element of Fig. 20 from one angle; and
Fig. 22 shows a flowchart of manufacturing an optical anti-counterfeiting element according to an optional embodiment of the present invention.

The figures above include the following reference signs:
10. Micro-structure forming layer; 20. Micro-structure 21. First micro-structure; 211. First design region; 212. First defect region; 22. Second micro-structure; 221. Second design region; 222. Second defect region; 23. Third micro-structure; 231. Third design region; 232. Third defect region; 30. Coating Layer; 31. First-segment coating layer; 311. First-segment effective region; 312. First ineffective region; 32. Second coating layer; 321. Second-segment effective region; 322. Second-segment ineffective region; 33. Third-segment coating layer; 331. Third-segment effective region; 332. Third-segment ineffective region; 34. Demetallized region; 40. Carrier object; 50. Optical anti-counterfeiting product; 60. Light spot; 70. Reflected light; 80. First observation angle; 90. Second observation angle; 100. Third observation angle; 120. Protective layer; 130. Optical anti-counterfeiting element; 140. Incident light; 150. Auxiliary protective layer.

### Detailed Description of the Embodiments

It is to be noted that embodiments in the present invention and features in the embodiments may be combined with one another without conflicts. Hereinafter, the present invention is described in detail with reference to the accompanying drawings and in conjunction with the embodiments.

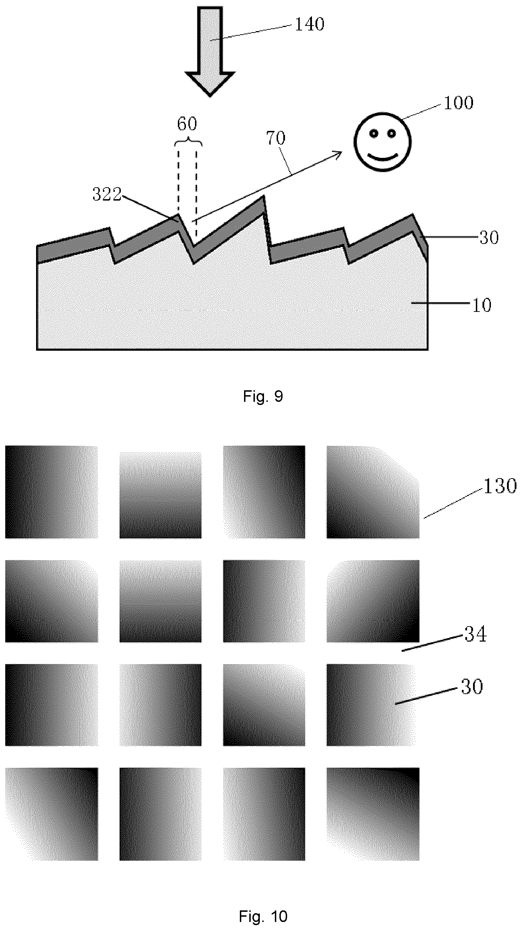

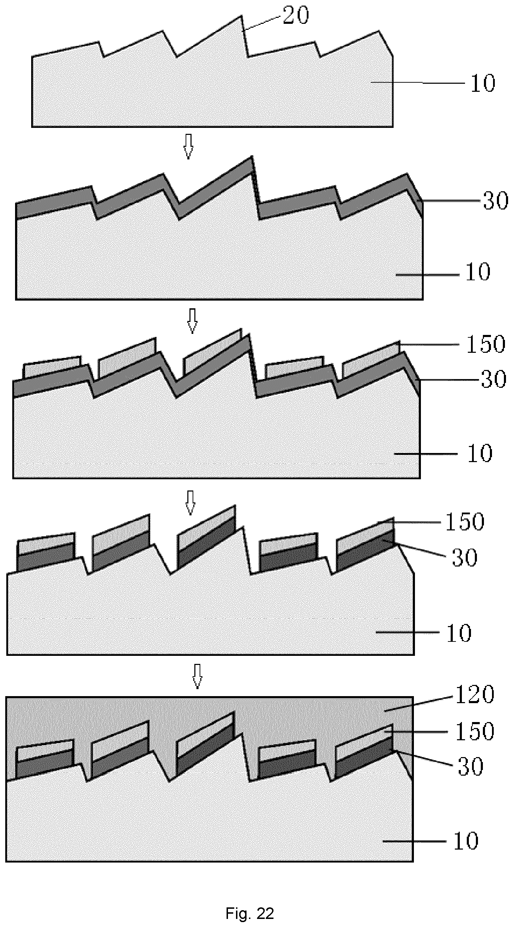

As shown in Figs. 10-22, an optical anti-counterfeiting element 130 includes a substrate, a micro-structure forming layer 10 and a coating layer 30, wherein the micro-structure forming layer 10 is arranged on one side surface of the substrate, the micro-structure forming layer 10 has micro-structures 20, and a longitudinal section of each of the micro-structures 20 has a preset shape; the coating layer 30 is arranged on the micro-structure forming layer 10, the micro-structures 20 are coated with the coating layer 30 to form coated micro-structures, and the height of each of the coated micro-structures continuously changes; wherein when shapes of the micro-structures 20 have an abrupt-change, the coating layer 30 has a demetallized region 34, and when the height of each of the micro-structures 20 changes continuously, the coating layer 30 has no demetallized region 34.

By providing the coating layer 30 on the micro-structure forming layer 10, the height of the formed coated micro-structure continuously changes, thereby avoiding defect generated by the coating layer 30 caused by abrupt change, avoiding abrupt change in optical features, and ensuring the anti-counterfeiting performance of the optical anti-counterfeiting element 130. In some embodiments of the present invention, shapes of the micro-structures 20 have an abrupt-change, and at this time, the coating layer 30 has a demetallized region 34, and the arrangement of the demetallized region 34 facilitates continuous change of the height of each of the coated micro-structures, thereby preventing optical features of the optical anti-counterfeiting element 130 from being affected by the abrupt change. In other embodiments, the height of each of the micro-structures 20 continuously changes without an abrupt-change position, and at this time, the coating layer 30 has no demetallized region 34, thereby avoiding the risk of the optical property of the coating layer 30 changing due to abrupt change of the micro-structure 20, and further avoiding the change of anti-counterfeiting features of the optical anti-counterfeiting element 130.

In an embodiment, the demetallized region 34 is provided at a position where the abrupt change occurs in the micro-structure 20, such that the height of each of the coated micro-structures changes continuously, wherein the demetallized region 34 is in a non-macro demetallized graphic-text form; the non-macro demetallized graphic-text refers to demetallized graphic-text which is not able to be observed directly by human eyes and is able to be observed only by using a microscope, and the non-macro demetallized graphic-text does not affect the anti-counterfeiting effect of the coating layer 30. The arrangement of the demetallized region 34 makes the micro-structure forming layer 10 at this position not interact with the coating layer 30 to generate a preset optical effect, thereby effectively avoiding the generation of undesired optical features. The demetallized region 34 does not affect the anti-counterfeiting effect of the coating layer 30, and the effect of the demetallized region 34 is to remove the defect of the coating layer 30 caused by the abrupt-change position of the micro-structure 20, so as to effectively improve the optical performance of the anti-counterfeiting element; moreover, the demetallized region 34 is not directly observed by human eyes, is seen only by using a microscope, and serves as a marker to increase the anti-counterfeiting performance of the anti-counterfeiting element.

In an embodiment, the demetallized region 34 has a feature width greater than or equal to 0.1 µm and less than or equal to 100 µm. If the feature width of the demetallized region 34 is less than 0.1 µm, it is difficult for the demetallized region 34 to completely remove the defect caused by the abrupt-change position of the micro-structure 20, thereby affecting the anti-counterfeiting effect. If the feature width of the demetallized region 34 is larger than 100 µm, the demetallized region 34 may be easily found by the observer, resulting in a deviation between an actual optical effect and a designed optical effect. The feature width of the demetallized region 34 is limited within a range of 0.1 µm to 100 µm, so as to prevent the demetallized region 34 from being found by the observer while ensuring complete removal of the defect caused by the abrupt-change position of the micro-structure 20, thereby ensuring the anti-counterfeiting effect of the optical anti-counterfeiting element 130.

In some embodiments of the present invention, the demetallized region 34 is mainly configured for removing the abrupt-change defect of the micro-structure 20 caused by manufacturing precision and replication precision, such that the actual optical effect is as close to the designed optical effect as possible. Therefore, the demetallized region 34 is not able to be too large, otherwise the demetallized region 34 will be found by the observer, resulting in a deviation between the actual optical effect and the designed optical effect.

It should be noted that, the range of the feature width of the demetallized region 34 is able to be calculated according to the Rayleigh criterion.

In an embodiment, the ratio of the area of the demetallized region 34 to the total area of the optical anti-counterfeiting element 130 is less than or equal to 0.5. The ratio of the area of the demetallized region 34 to the total area of the optical anti-counterfeiting element 130 is limited to be within the range of less than or equal to 0.5, which is beneficial to keeping the original effectively designed micro-structure 20, and is beneficial to reducing the deviation between the actual optical effect and the design optical effect of the optical anti-counterfeiting element 130.

It should be noted that, in some embodiments of the present invention, the demetallized region 34 will not add additional useful information; therefore, it is necessary to retain as many of the original effectively designed micro-structure 20 as possible.

When parameters of the micro-structure 20 change, it may be that the height of each of the micro-structures 20 at this position abruptly changes. In an embodiment, as for two reflective surfaces in close proximity to each other and having the same orientation, the position of the highest point of a first reflective surface in the plane where the optical anti-counterfeiting element 130 is located is theoretically the same as the position of the lowest point of a second reflective surface in the plane where the optical anti-counterfeiting element 130 is located, but the height appears to abruptly change from a maximal value to a minimal value.

When the parameters of the micro-structure 20 change, it may also be caused by micro-structures 20 with different parameters. In an embodiment, regarding two micro-structures having a 90° difference in orientation, there is abrupt change in the micro-structures 20 at a boundary therebetween.

In an actual manufacturing process, manufacturing precision, material resolution, and replication and transfer process will all cause deviations in these abrupt-change regions, which will cause interference to the design effect; therefore, the coating layer 30 over these deviation regions needs to be removed.

When the height of each of the micro-structures 20 changes continuously, the micro-structure 20 will not have an abrupt change, and thus during manufacturing and replication, no obvious interference will be generated to the original design; therefore, hollowing out may not be performed.

In some embodiments, when there are a plurality of demetallized regions 34, at least two demetallized regions 34 among the plurality of demetallized regions 34 are connected with each other.

In some embodiments, when there are a plurality of demetallized regions 34, at least two demetallized regions 34 among the plurality of demetallized regions 34 are not connected with each other.

Since the demetallized regions 34 are determined by the variation situations of the parameters of the micro-structure 20, the demetallized regions 34 is able to be connected with each other, and is also able to be not completely connected with each other, and of course, is also able to be completely not connected with each other, which may be designed according to actual requirements of the micro-structure 20 and is not specifically limited herein.

In some embodiments, the preset shape includes at least one of a sine shape, a wedge shape, symmetrical rectangular teeth, asymmetrical rectangular teeth, a semicircular rectangular shape, and a trapezoid shape. The type of the micro-structure 20 is basically not limited, and is not limited herein. Moreover, the described preset shapes of the micro-structure 20 are shapes of a micro-structure 20 commonly used in the optical anti-counterfeiting element 130.

In some embodiments, the micro-structure 20 has a feature size of greater than or equal to 0.1 µm and less than or equal to 500 µm in a plane parallel to the substrate. The plane where the optical anti-counterfeiting element 130 is located is defined as an x-y plane, and the type and shape of the micro-structure 20 are determined by the micro-structure 20 within the x-y plane. The feature size of the micro-structure 20 in the plane parallel to the substrate is the feature size of the micro-structure 20 in the x-y plane.

In some embodiments, the micro-structure 20 has a feature size of greater than or equal to 0.2 µm and less than or equal to 100 µm in the plane parallel to the substrate.

It should be noted that, the direction perpendicular to the x-y plane is a z-axis direction, and the height of each of the micro-structures 20 changes in the z-axis direction.

In some embodiments, the coating layer 30 provides a preset reflective feature or preset transmissive feature. In order to enhance the optical effect of the optical anti-counterfeiting element 130, the coating layer 30 of reflection enhancement feature or transmission enhancement feature is deposited on the micro-structure forming layer 10.

In an embodiment, the coating layer 30 is a single reflective layer or a single dielectric layer, in another embodiment, the coating layer 30 is a stack layer formed by stacking multiple dielectric layers; in another embodiment, the coating layer 30 is a stack layer formed by alternately stacking reflective layers and dielectric layers.

In some embodiments, the coating layer 30 is formed by alternately stacking high-refractive-index dielectric layers and low-refractive-index dielectric layers, and this structure forms selective reflection and transmission to light of a specific wavelength, forms a first color when observed from the front, and forms a complementary color of the first color when observed through light transmission; and when light rays are obliquely incident, an optical path of the light rays when propagating in the coating layer 30 is different from an optical path of the light rays when perpendicularly incident, and a second color is formed, thereby forming a color change effect. Moreover, when the structure in which the high-refractive-index dielectric layers and the low-refractive-index dielectric layers are alternately stacked is combined with a one-dimensional sub-wavelength grating, a third color different from that of the stack structure is formed. The one-dimensional sub-wavelength grating has a period of 350 nm and a depth of 110 nm.

In an embodiment, the coating layer is formed by stacking a high-refractive-index dielectric layer, a reflective layer, and a high-refractive-index dielectric layer, in another embodiment, the coating layer is a Fabry-Perot resonant cavity with a reflective layer-a dielectric layer-a reflective layer. The Fabry-Perot resonant cavity is a wavelength selection structure with higher reflection efficiency, and is a film structure of an "absorption layer/dielectric layer/reflective coating layer". The absorption layer is made of a metal material, and has a relatively thin thickness; when light rays pass through the layer, approximately half of the light rays is reflected, and the other half of the light rays is transmitted; therefore, the absorption layer may be referred to as a "transflective film", which includes but is not limited to chromium, nickel, copper, cobalt, titanium, vanadium, tungsten, tin, silicon, germanium and a combination thereof, and the thickness thereof is able to be 2 nm to 30 nm.

In the "Fabry-Perot resonant cavity" structure, the absorption layer serves as a beam splitter, which reflects a half of the light rays (referred to as a first light beam), and transmits the other half of the light rays. The transmitted light, after passing through the dielectric layer, is reflected by the reflective coating layer, and then is emitted through the absorption layer (referred to as a second light beam), and the first light beam and the second light beam interact to generate interference, so as to form selective enhancement of a specific wavelength. Therefore, a color is observed. When the light rays change the incident direction, an optical path of a light beam in the dielectric layer changes, and if the dielectric material is a high-refractive-index material, the color does not change or does not change significantly; while if the dielectric material is a low-refractive-index material, the color change is obvious, and a so-called optically variable effect is achieved. In an embodiment, the "Fabry-Perot resonant cavity" structure is metal chrome/silicon dioxide/metal aluminum or metal aluminum/aluminum oxide/metal aluminum, and when an observation angle is changed, the color of the Fabry-Perot interferometer may change.

In an embodiment, the dielectric layer is a metal compound, and the material of the dielectric layer is a low-refractive-index dielectric material with a refractive index less than 1.8, including but not limited to silicon dioxide, magnesium fluoride, cryolite, aluminum oxide and a combination thereof, and the thickness thereof may be 100 to 1000 nm; in another embodiment, the dielectric material is a high-refractive-index material with a refractive index greater than 1.8, including but not limited to any material of ZnS, TiN, TiO₂, TiO, Ti₂O₃, Ti₃O₅, Ta₂O₅, Nb₂O₅, CeO₂, Bi₂O₃, Cr₂O₃, Fe₂O₃, or a combination thereof. In an embodiment, the material of the coating layer is a metal material having high reflectivity, in another embodiment, the material of the coating layer is a non-metal material, the material of the coating layer includes but not be limited to any material of aluminum, silver, tin, nickel, chromium, platinum, copper, gold, and silicon or a combination thereof, and has a thickness greater than or equal to 10 nm.

In some embodiments of the present invention, the reflective layer is a pure metal material or an alloy having high reflectivity, in an embodiment, the reflective layer is a full-spectrum reflective material, such as aluminum, silver, tin, nickel, chromium, platinum, etc.; and in another embodiment, the reflective layer is a reflective material having a specific color and a corresponding alloy material, e.g. materials such as copper and gold, and such a material may produce a fixed color while providing a high reflectivity. The function of the reflective layer is mainly to increase the diffraction rate and reflectivity, and the reflective layer itself does not have the effect of color change.

In some embodiments, when a metal reflective material is combined with a reflective grating, the reflection efficiency is improved, and a bright reflection effect is formed. In an embodiment, the reflective grating is a wedge-shaped blazed grating with a period of 13 µm and a depth of 2 µm.

In some embodiments, the reflective layer is a metal compound, and the metal compound is able to be a metal oxide, such as titanium dioxide, zirconium dioxide, etc.; or a metal sulfide such as zinc sulfide; and is also able to be other metal compounds.

In some embodiments, the material of the coating layer 30 is an optical medium material, such as silicon dioxide or the like.

The refractive index n of the high-refractive-index dielectric layer is greater than or equal to 1.8, including but not limited to any material of ZnS, TiN, TiO₂, TiO, Ti₂O₃, Ti₃O₅, Ta₂O₅, Nb₂O₅, CeO₂, Bi₂O₃, Cr₂O₃, Fe₂O₃ or a combination thereof.

The refractive index n of the low-refractive-index dielectric layer is less than 1.8, including but not limited to any material of SiO₂, MgF₂, Na₃AlO₆, Al₂O₃, or a combination thereof.

In some embodiments, the optical anti-counterfeiting element 130 further includes a protective layer, wherein the protective layer is arranged on the coating layer 30, and the protective layer is a transparent layer. The difference in refractive indexes between the protective layer and the micro-structure forming layer 10 is less than 0.5. In order to achieve better protection performance and durability, the transparent protective layer is covered on the coating layer 30. The protective layer is made of a material including but not limited to, an acrylic material. In addition, the closer the difference between the refractive index of the protective layer and the refractive index of the micro-structure forming layer 10 to 0, the better; in this way, after a protective adhesive is coated, the protective layer in the demetallized regions 34 and the micro-structure forming layer 10 may be considered to be close to or even identical in optical properties; and the interface between the protective layer and the micro-structure forming layer 10 will not exist in terms of optical level, which is equivalent to completely filling gaps existing in the original demetallized regions.

In some embodiments, the optical anti-counterfeiting element 130 is configured as a label, an identifier, a wide strip, a transparent window, a coating film or the like, which may be adhered to various articles by various adhesive mechanisms. In some embodiment, the optical anti-counterfeiting element is transferred to high-security products and high-value-added products such as banknotes, credit cards, etc.

An optical anti-counterfeiting product 50 includes the optical anti-counterfeiting element 130 as described above. The optical anti-counterfeiting product 50 having the described optical anti-counterfeiting element 130 has the advantage of a good anti-counterfeiting effect. The optical anti-counterfeiting product 50 includes, but is not limited to various high-security products and high-value-added products such as banknotes, credit cards, passports, securities, etc., and various packaging papers, packaging boxes and the like.

In some embodiments of the present invention, : a method for manufacturing an optical anti-counterfeiting element 130 is provided, wherein the method for manufacturing an optical anti-counterfeiting element 130 is configured for manufacturing the described optical anti-counterfeiting element 130, and the method for manufacturing the optical anti-counterfeiting element 130 includes: a micro-structure forming layer 10 having a micro-structure 20 is formed on a substrate; a coating layer 30 having a demetallized region 34 is formed on the micro-structure forming layer 10; and a protective layer 120 is formed on the coating layer 30.

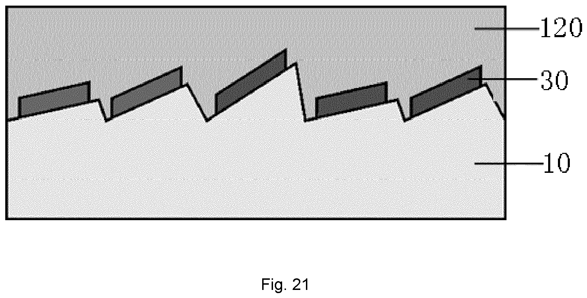

As shown in Fig. 21, the method for manufacturing an optical anti-counterfeiting element 130 is configured for manufacturing the described optical anti-counterfeiting element 130, and the method for manufacturing an optical anti-counterfeiting element 130 includes: a micro-structure layer 10 having a micro-structure 20 is obtained by means of mold pressing or ultraviolet casting; a coating layer 30 is deposited on the micro-structure forming layer 10 by means of physical vapor deposition; a protective adhesive is printed on the coating layer 30 by printing to form an auxiliary protective layer 150, and an abrupt-change position of the micro-structure 20 is exposed; the described structure is placed in a corresponding corrosion solution for soaking, so as to remove the coating layer 30 in the exposed regions; and a protective layer 120 is coated on the described structure by means of wet coating, to form the optical anti-counterfeiting element 130.

The refractive index of the protective layer 120 is the same as or similar to that of the micro-structure forming layer 10, so as to form an optically uniform micro-structure forming-protective layer.

### Embodiment I

In order to facilitate understanding of technical solutions of some embodiments of the present invention, reasons why an optical anti-counterfeiting element in the related art produces a non-preset optical effect is described.

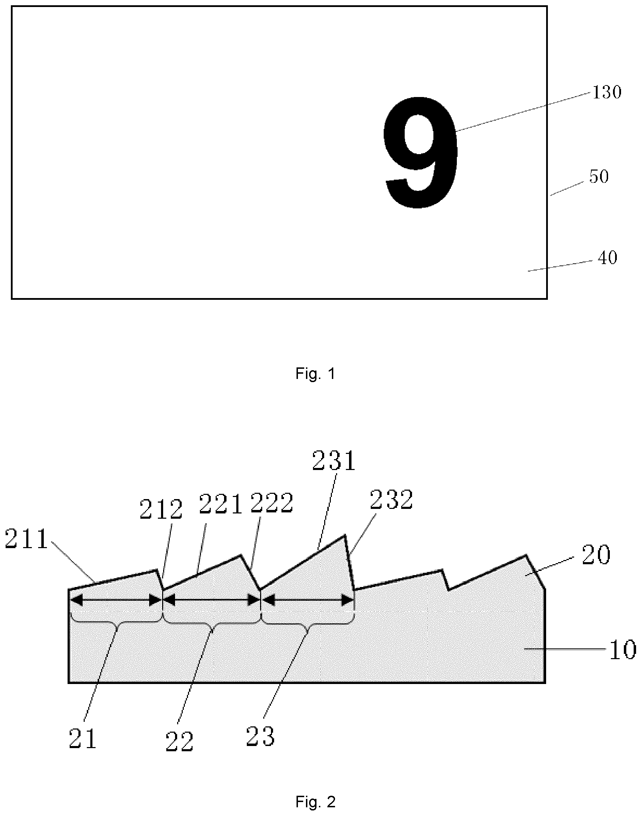

Figs. 1-9 all relate to an optical anti-counterfeiting element 130 in the related art. The optical anti-counterfeiting element 130 is able to be attached on a carrier object 40 to form an optical anti-counterfeiting product 50. The carrier object 40 is able to be banknotes, paper, passports, securities, etc., and the material thereof is able to be paper, polypropylene, polycarbonate, etc.

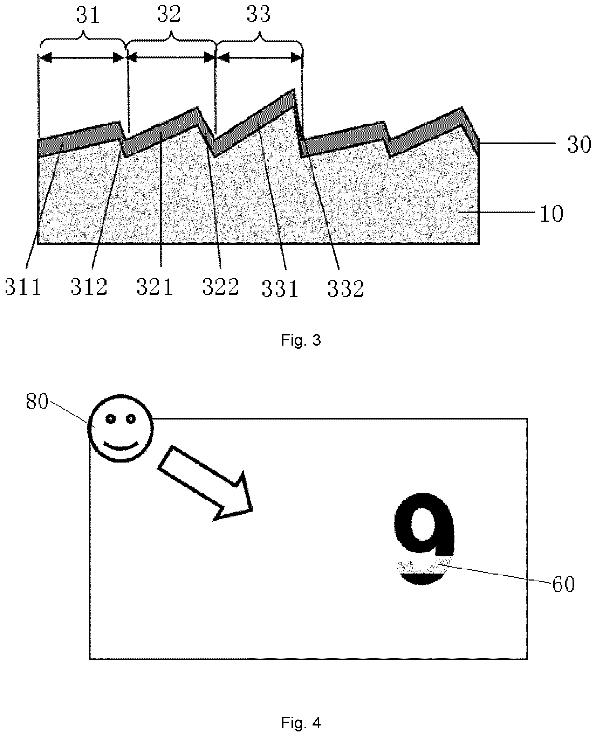

Figs. 2 and 3 are schematic cross-sectional views in a y-z plane of the optical anti-counterfeiting element 130 as shown in Fig. 1.

In order to identify each position more clearly, the cross-sectional views are shown in Fig. 2 and Fig. 3 respectively. In Fig. 2, a micro-structure forming layer 10 has reflective surfaces with different inclination angles, and in the cross-sectional view, the micro-structure forming layer has a wedge-shaped structure. Typical first micro-structure 21, second micro-structure 22 and third micro-structure 23 are taken for illustration. The first micro-structure 21 has two parts, i.e. a first design region 211 with a gentle gradient and a first defect region 212 with a steep gradient. Likewise, the second micro-structure 22 has two parts, i.e. a second design region 221 with a gentle gradient and a second defect region 222 with a steep gradient; and the third micro-structure 23 has two parts, i.e. a third design region 231 with a gentle gradient and a third defect region 232 with a steep gradient. When designing the micro-structure, the shapes of the micro-structure is perfect, that is, the first micro-structure 21 only has the first design region 211, the second micro-structure 22 only has the second design region 221, and the third micro-structure 23 only has the third design region 231. However, due to limitations of manufacturing process, material resolution and subsequent replication process of the micro-structure 20, generally, side walls of the micro-structure 20 will not be completely perpendicular, and the first defect region 212, the second defect region 222 and the third defect region 232 as shown in Fig. 2 will all appear.

As shown in Fig. 3, a coating layer 30 covers the micro-structure forming layer 10, in an embodiment, the coating layer 30 is made of metal aluminum and has a thickness of 100 nm, and is obtained by deposition on the micro-structure forming layer 10 via thermal evaporation. Since the coating layer is different from a coating obtained by wet coating, an optical thin film obtained by physical vapor deposition (PVD) such as thermal evaporation may be uniformly coated on the surface of the micro-structure 20, and the shape of the coating layer 30 substantially maintains the original shape of the micro-structure 20, i.e. same-shape coverage. Therefore, a first-segment coating layer 31 also has a first-segment effective region 311 and a first-segment ineffective region 312; a second-segment coating layer 32 also has a second-segment effective region 321 and a second-segment ineffective region 322; and a third-segment coating layer 33 also has a third-segment effective region 331 and a third-segment ineffective region 332.

Figs. 4-6 show appearance of the optical anti-counterfeiting element 130 shown in Fig. 1 at different observation angles.

Fig. 4 shows the position of a light spot 60 in the optical anti-counterfeiting element 130 seen at a first observation angle 80, wherein in Fig. 4, the light spot 60 is located at a lower part of the optical anti-counterfeiting element 130.

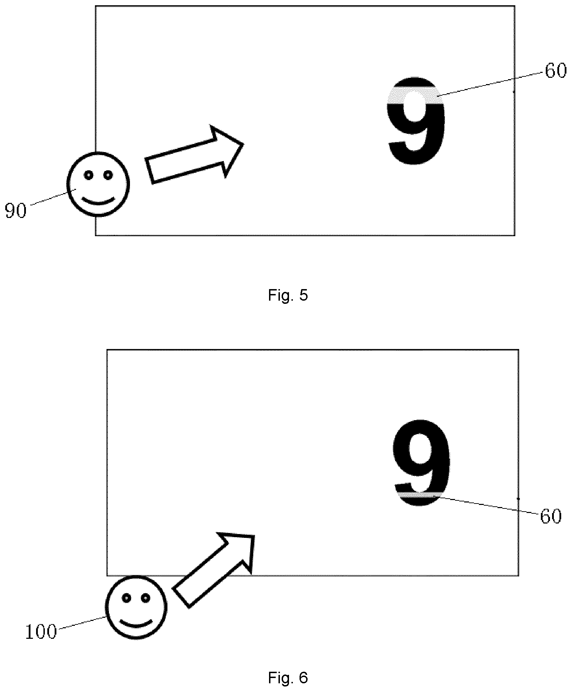

Fig. 5 shows the position of a light spot 60 in the optical anti-counterfeiting element 130 seen at a second observation angle 90, wherein in Fig. 5, the light spot 60 is located at an upper part of the optical anti-counterfeiting element 130.

Fig. 6 shows the position of a light spot 60 in the optical anti-counterfeiting element 130 seen at a third observation angle 100, wherein in Fig. 6, the intensity of the light spot 60 is weaker. The light spot 60 also moves along with the change of the observation direction, so as to form a second dynamic feature; however, the dynamic feature is not designed, and may interfere with a dynamic feature required by a first design.

When the first observation angle 80 changes to the second observation angle 90, the light spot 60 gradually moves from the position shown in Fig. 4 to the position shown in Fig. 5, and such a movement of the light spot 60 brings a dynamic effect. When the second observation angle continuously increases to the third observation angle 100, the light spot 60 with a weaker intensity appears; the light spot 60 also moves along with the change of the observation direction, so as to form a second dynamic feature; however, the dynamic feature is not designed, and may interfere with a dynamic feature required by a first design.

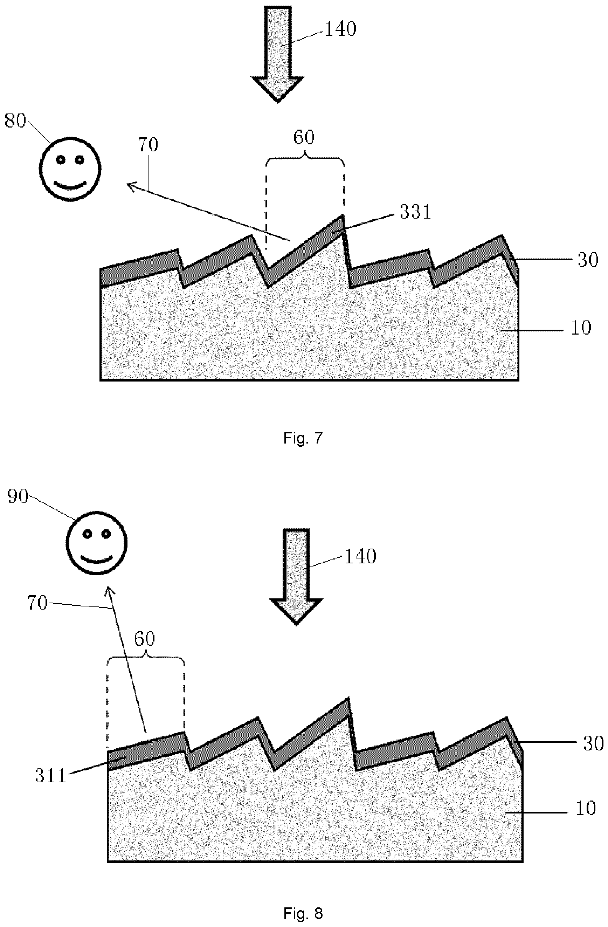

Figs. 7-9 provide sources of generating the interfering light spot.

Fig. 7 shows a reflection position of the coating layer 30 at the first observation angle 80. Under the first observation angle 80, according to the law of reflection, the third-segment effective region 331 of the third-segment coating layer 33 reflects incident light 140 to form reflected light 70 (the light spot 60 shown in Fig. 4) which is able to be observed by the observer; while the first-segment coating layer 31 and the second-segment coating layer 32 are not able to reflect lights into the eyes of the observer and are not be observed.

Fig. 8 shows a reflection position of the coating layer 30 at the second observation angle 90. Under the second observation angle 90, according to the law of reflection, reflected light 70 reflected by the first-segment effective region 311 of the first-segment coating layer 31 is seen by the observer (the light spot 60 shown in Fig. 5).

Fig. 9 shows a reflection position of the coating layer 30 at the third observation angle 100. Under the third observation angle 100, reflected light 70 reflected by the second-segment ineffective region 322 of the second-segment coating layer 32 is seen by the observer (the light spot 60 shown in Fig. 6, i.e. an interfering light spot). Since the ineffective region has a smaller area with respect to the effective region, the interfering light spot is relatively dark, but the light spot is not required for design, thereby forming interference.

When the coating layer 30 is a coating layer of "reflective layer/dielectric layer/reflective layer, in which the reflective layer is made of a metal material", a specific color may be formed, and such interference will not only form a situation that light spots appear repeatedly, but also cause interference of color deviation.

The principle of occurrence of the interfering light spot has been understood by Figs. 1-9, and principles of eliminating the interfering light spot in some embodiments of the present invention will be introduced below.

In order to solve the described problem, the coating layer 30 in interference regions needs to be removed; and the shape of the micro-structure 20 does not easily change, and thus, an effective way is to remove specific regions (i.e. the ineffective regions) in a demetallized manner after the coating layer 30 is formed, so as to achieve the effect of removing interference.

Fig. 10 is a condition of the optical anti-counterfeiting element 130 in an embodiment of the present invention, wherein each square having a gradually-changing grayscale represents a coating layer 30 having a gradually-changing height on a micro-structure 20, and the blacker the color, the lower the height, and the whiter the color, the higher the height. White regions around each square having a gradually-changing grayscale represent demetallized regions 34.

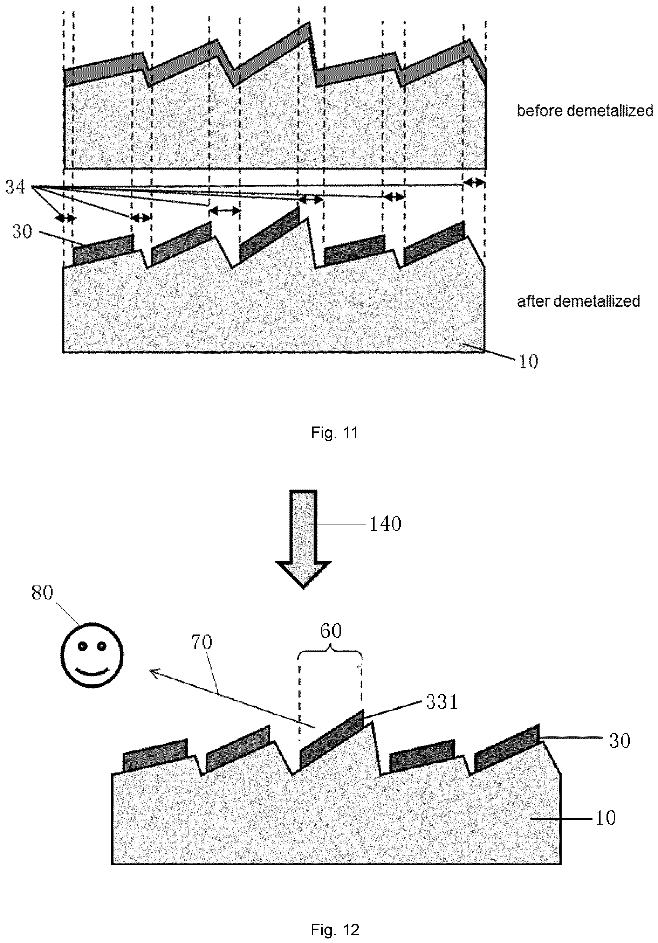

Fig. 11 is a state diagram of the optical anti-counterfeiting element 130 before and after hollowing-out. It is determined from Fig. 11 that after the continuous coating layer 30 on the micro-structure forming layer 10 of the optical anti-counterfeiting element 130 has been demetallized, all ineffective regions of the coating layer 30 have been removed, and the effective regions are remained to form a coating layer 30 having demetallized regions 34.

Figs. 12-14 respectively show the situations of reflected light of the optical anti-counterfeiting element 130 having demetallized regions 34 observed at the first observation angle 80, the second observation angle 90 and the third observation angle 100.

Figs. 12-14 show observation situations of the coating layer having demetallized regions 34 as shown in Fig. 11.

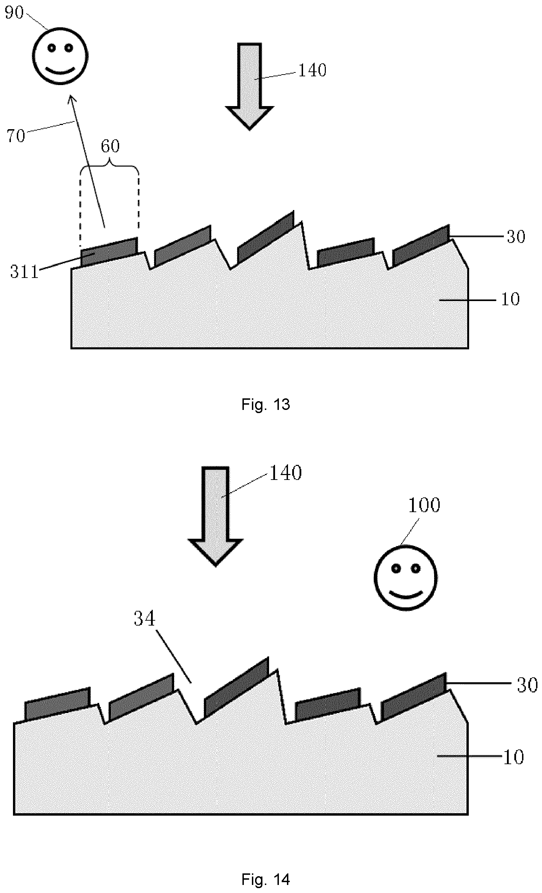

Fig. 12 shows a reflection position of the coating layer 30 at the first observation angle 80. Fig. 13 shows a reflection position of the coating layer 30 at the second observation angle 90. Fig. 14 shows a reflection position of the coating layer 30 at the third observation angle 100.

Fig. 12 shows a reflection position of the coating layer 30 at the first observation angle 80. Under the first observation angle 80, according to the law of reflection, the third-segment effective region 331 of the third-segment coating layer 33 reflects incident light 140 to form reflected light 70 (the light spot 60 shown in Fig. 4) which may be observed by the observer; while the first-segment coating layer 31 and the second-segment coating layer 32 may not enter the eyes of the observer and may not be observed.

Fig. 13 shows a reflection position of the coating layer 30 at the second observation angle 90. Under the second observation angle 90, according to the law of reflection, reflected light 70 reflected by the first-segment effective region 311 of the first-segment coating layer 31 is seen by the observer (the light spot 60 shown in Fig. 5).

Fig. 14 shows a reflection position of the coating layer 30 at the third observation angle 100. Under the third observation angle 100, the coating layer 30 in the second-segment ineffective region 322 of the second-segment coating layer 32 is demetallized; therefore, there is no interference of reflected light here. Therefore, the interfering light spot is removed, so as to ensure that the optical anti-counterfeiting element 130 achieves a preset optical effect.

It is determined from Figs. 12-14 that the coating layer 30 may form light spots at the effective regions; and the coating layer 30 at the ineffective regions has been removed in a demetallized manner, therefore, there is no interference of reflected light at the ineffective regions. Therefore, the interfering light spot is removed, so as to ensure that the optical anti-counterfeiting element 130 achieves the preset optical effect.

The effective regions include the first-segment effective region 311, the second-segment effective region 321 and the third-segment effective region 331; and the ineffective regions include the first-segment ineffective region 312, the second-segment ineffective region 322, and the third-segment ineffective region 332.

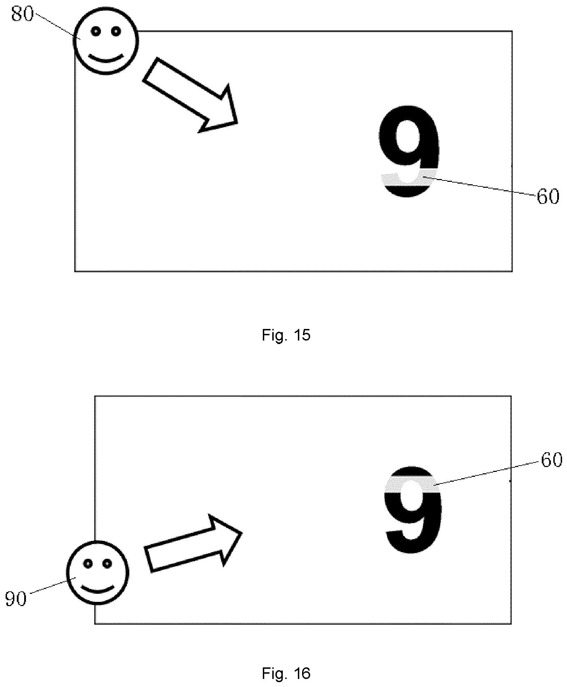

Figs. 15-17 show appearance of the optical anti-counterfeiting element 130 shown in Fig. 10 at different observation angles.

Fig. 15 shows the position of a light spot 60 in the optical anti-counterfeiting element 130 seen at a first observation angle 80, wherein in Fig. 15, the light spot 60 is located at a lower part of the optical anti-counterfeiting element 130.

Fig. 16 shows the position of a light spot 60 in the optical anti-counterfeiting element 130 seen at a second observation angle 90, wherein in Fig. 16, the light spot 60 is located at an upper part of the optical anti-counterfeiting element 130.

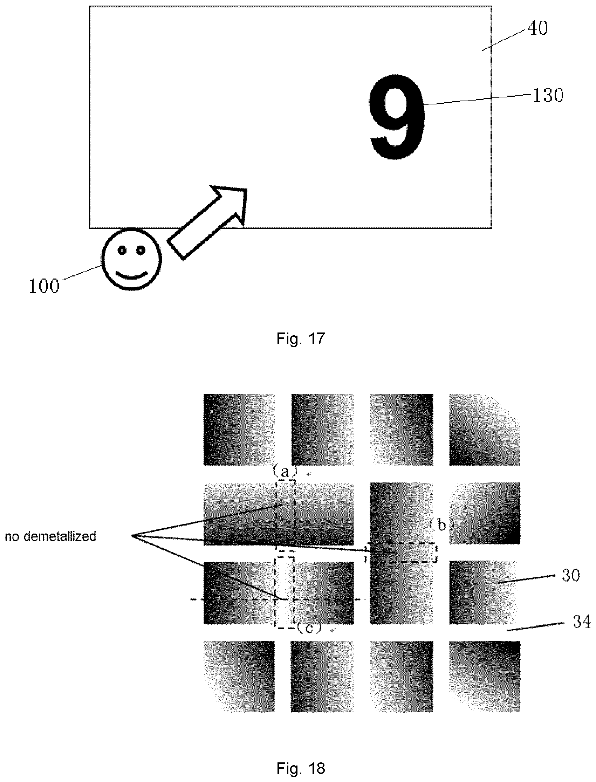

Fig. 17 shows an optical effect produced by viewing the optical anti-counterfeiting element 130 at the third observation angle 100, in which no light spot will be seen.

When the first observation angle 80 changes to the second observation angle 90, the light spot 60 gradually moves from the position shown in Fig. 15 to the position shown in Fig. 16, and such a movement of the light spot 60 brings a dynamic effect. When the second observation angle continuously increases to the third observation angle 100, no light spot occurs, and the optical anti-counterfeiting element 130 in the present invention only has one dynamic effect.

### Embodiment II

The difference from Embodiment I lies in that: regions of the demetallized regions 34 are different.

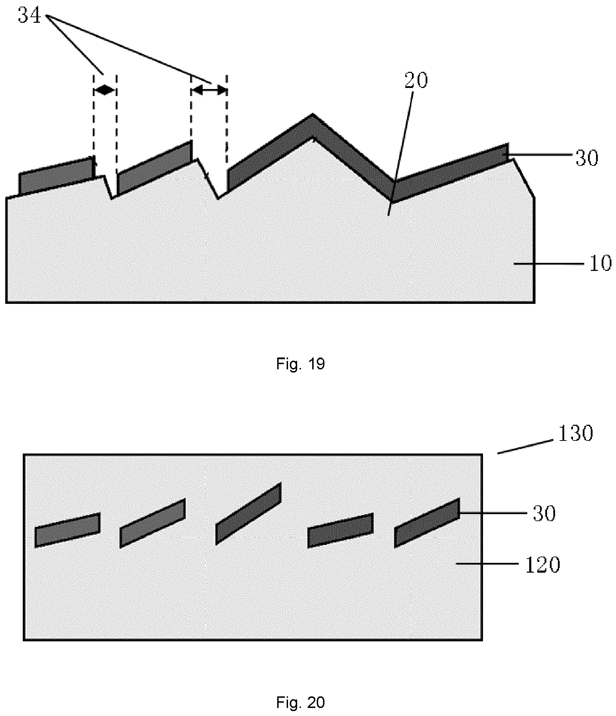

As shown in Figs. 18 and 19, as the height of a part of the micro-structure 20 does not abruptly change or the parameters of some reflective surfaces of the micro-structure 20 are the same, it is not necessary to hollow-out the boundaries of all reflective surfaces. As shown in (a) and (b) of Fig. 18, the two regions include two reflective surfaces, but the reflective surfaces are arranged side by side; therefore, there is no change between the two reflective surfaces; and therefore, no hollowing-out is required. In the region (c) of Fig. 18, although the two reflective surfaces have different parameters and different orientations, no abrupt change of height occurs because the heights of the micro-structure 20 at the boundary of the two reflective surfaces change continuously; therefore, also, no hollowing-out is required.

Fig. 19 is a longitudinal sectional view of Fig. 18. The coating layer 30 is deposited on the surface of the micro-structure forming layer 10, demetallized regions 34 are provided at abrupt-change positions of the micro-structure 20, and heights of the micro-structure 20 in other regions continuously change, and thus no hollowing-out is required, such that the coating layer 30 is continuously distributed.

### Embodiment III

The difference from Embodiment 1 lies in that a protective layer 120 is provided in this embodiment.

In the specific embodiments shown in Figs. 20 and 21, a protective layer 120 is provided on the coating layer 30.

In this embodiment, generally, a protective adhesive is uniformly coated on the surface of the coating layer 30 by means of wet coating to form the protective layer 120. When the refractive indexes of the micro-structure forming layer 10 and the protective layer 120 are the same or similar, it is considered that the optical properties of the two materials are the same, the reflection and refraction efficiency of a contact surface between the two may be ignored, and the two is considered as one material, to form the situation as shown in Fig. 21. That is to say, the coating layer 30 in a separated state is embedded between the micro-structure forming layer 10 and the protective layer 120.

The content above merely relates to preferred embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. An optical anti-counterfeiting element, comprising:
a substrate;
a micro-structure forming layer (10), wherein the micro-structure forming layer (10) is arranged on a side surface of the substrate, the micro-structure forming layer (10) has micro-structures (20), and a longitudinal section of each of the micro-structures (20) has a preset shape; and
a coating layer (30), wherein the coating layer (30) is arranged on the micro-structure forming layer (10), the micro-structures (20) are coated with the coating layer (30) to form coated micro-structures, and a height of each of the coated micro-structures continuously changes;
wherein when shapes of the micro-structures (20) have an abrupt-change, the coating layer (30) has a demetallized region (34), and when a height of each of the micro-structures (20) changes continuously, the coating layer (30) has no demetallized region (34).

2. The optical anti-counterfeiting element as claimed in claim 1, wherein the demetallized region (34) is provided at a position where the abrupt change occurs in the micro-structures (20), such that the height of each of the coated micro-structures changes continuously, wherein the demetallized region (34) is in a non-macro demetallized graphic-text form; the non-macro demetallized graphic-text refers to demetallized graphic-text which is not able to be observed directly by human eyes and is able to be observed only by using a microscope, and the non-macro demetallized graphic-text does not affect the anti-counterfeiting effect of the coating layer (30).

3. The optical anti-counterfeiting element as claimed in claim 2, wherein the demetallized region (34) has a feature width greater than or equal to 0.1 µm and less than or equal to 100 µm.

4. The optical anti-counterfeiting element as claimed in claim 2, wherein a ratio of an area of the demetallized region (34) to a total area of the optical anti-counterfeiting element is less than or equal to 0.5.

5. The optical anti-counterfeiting element as claimed in claim 2, wherein when there are a plurality of demetallized regions (34), at least two demetallized regions (34) among the plurality of demetallized regions (34) are connected with each other.

6. The optical anti-counterfeiting element as claimed in claim 2, wherein when there are a plurality of demetallized regions (34), at least two demetallized regions (34) among the plurality of demetallized regions (34) are not connected with each other.

7. The optical anti-counterfeiting element as claimed in any one of claims 1-6, wherein the preset shape comprises at least one of a sine shape, a wedge shape, symmetrical rectangular teeth, asymmetrical rectangular teeth, a semicircular rectangular shape, and a trapezoid shape.

8. The optical anti-counterfeiting element as claimed in any one of claims 1-6, wherein each of the micro-structures (20) has a feature size of greater than or equal to 0.1 µm and less than or equal to 500 µm in a plane parallel to the substrate.

9. The optical anti-counterfeiting element as claimed in claim 8, wherein each of the micro-structures (20) has the feature size of greater than or equal to 0.2 µm and less than or equal to 100 µm in the plane parallel to the substrate.

10. The optical anti-counterfeiting element as claimed in any one of claims 1-6, wherein the coating layer (30) provides a preset reflective feature or a preset transmissive feature.

11. The optical anti-counterfeiting element as claimed in any one of claims 1-6, wherein the coating layer (30) is a single reflective layer or a single dielectric layer.

12. The optical anti-counterfeiting element as claimed in any one of claims 1-6, wherein
the coating layer (30) is a stack layer formed by stacking multiple layers of dielectric layers; or
the coating layer (30) is a stack layer formed by alternately stacking reflective layers and dielectric layers.

13. The optical anti-counterfeiting element as claimed in any one of claims 1-6, wherein the optical anti-counterfeiting element further comprises a protective layer (120), wherein the protective layer is arranged on the coating layer (30), and the protective layer (120) is a transparent layer.

14. The optical anti-counterfeiting element as claimed in claim 13, wherein a difference in refractive indexes between the protective layer and the micro-structure forming layer (10) is less than 0.5.

15. An optical anti-counterfeiting product, comprising the optical anti-counterfeit element as claimed in any one of claims 1-14.

16. A method for manufacturing an optical anti-counterfeiting element, wherein the method for manufacturing an optical anti-counterfeiting element is configured for manufacturing the optical anti-counterfeiting element as claimed in any one of claims 1-14, wherein the method for manufacturing an optical anti-counterfeiting element comprises:
forming a micro-structure forming layer (10) having micro-structures (20) on a substrate;
forming a coating layer (30) having a demetallized region (34) on the micro-structure forming layer (10); and
forming a protective layer (120) on the coating layer (30).
